Europäisches Patentamt

European Patent Office

Office européen des brevets

(11) Numéro de publication: **0 265 829**
**A1**

## (12) DEMANDE DE BREVET EUROPEEN

(21) Numéro de dépôt: 87115423.3

(22) Date de dépôt: 21.10.87

(51) Int. Cl.⁴ **B65D 51/00** , B67D 5/08 , B60K 15/04

(30) Priorité: 22.10.86 FR 8614664

(43) Date de publication de la demande:
04.05.88 Bulletin 88/18

(84) Etats contractants désignés:
BE CH DE ES FR GB IT LI NL SE

(71) Demandeur: **COMPAGNIE GENERALE D'AUTOMATISME CGA-HBS Société Anonyme dite**
**12, rue de la Baume**
**F-75008 PARIS(FR)**

(72) Inventeur: **Echaubard, Ghylaine**
**Résidence des Rives de !'Yerres**
**F-91330 Yerres(FR)**

(74) Mandataire: **Weinmiller, Jürgen et al**
**Lennéstrasse 9 Postfach 24**
**D-8133 Feldafing(DE)**

(54) Dispositif d'ouverture et de fermeture d'un réservoir et procédé automatique de remplissage de celui-ci.

(57) L'invention concerne un dispositif d'ouverture et de fermeture d'un réservoir, ledit dispositif comportant une embase (12), d'un couvercle (13), et une languette (14) solidaires du tube d'entrée (11) de ce réservoir, l'embase (14) étant fixée à l'extrémité de ce tube (11), le couvercle (13) et la languette (14) étant mobiles en rotation par rapport à cette embase (12) autour de deux axes (9 et 17) parallèles de directions perpendiculaires à l'axe de symétrie ( ) du tube d'entrée (11), entre une position fermée dans laquelle la languette (14) bloque le couvercle (13) qui coiffe, alors, l'extrémité du tube d'entrée (11) et une position ouverte dans laquelle le couvercle (13) a échappé à la languette (14), un ressort de rappel (18) agissant sur la languette pour la rappeler en position fermée. La languette (14) a une surface d'appui (19) suffisante pour permettre, en position fermée, à un outil exerçant une certain pression, sans précision de positionnement de celui-ci, de la faire basculer en laissant ainsi échapper le couvercle (13). Un ressort (15), solidaire de l'embase (12), permet l'ouverture du couvercle (13), le couvercle (13) ayant sa surface supérieure (23) qui sert de surface d'appui à l'outil pour la fermeture.

Application notamment au remplissage de réservoir de véhicules à moteur.

FIG.2

## Dispositif d'ouverture et de fermeture d'un réservoir et procédé automatique de remplissage de celui-ci .

L'invention concerne un dispositif d'ouverture et de fermeture d'un réservoir, et un procédé automatique de remplissage de celui-ci.

Dans la suite de la description on utilisera le terme "réservoir" mais il s'agit plus généralement de toute enceinte permettant de contenir un produit fluide.

Si on considère le cas particulier d'un réservoir de véhicule, un des éléments importants du remplissage en carburant d'un tel réservoir se situe au niveau du bouchon.

En général ces bouchons sont prévus pour une ouverture manuelle et se prêtent mal à la robotisation ;

Ainsi les bouchons utilisant le principe du vissage / dévissage nécissitent un centrage du bouchon par rapport au tube d'entrée du réservoir, ce qui crée une opération complexe de commande au niveau de la machine automatique ; le vissage nécessite un mouvement de préhension du bouchon et de rotation de celui-ci, donc un outil spécial et une machine automatique comportant un degré de liberté spécialisé

Le bouchon doit être, en outre, conservé dans la "main" de la "machine automatique", ou déposé, puis repris ci que ne simplifie pas les opérations de manutension.

Une autre solution utilise les techniques de connexions automatiques avec centrage du genre "connexion rapide".

Ces systèmes ont l'inconvénient d'être dans une gamme de prix peu acceptables pour une diffusion grande série.

Une troisième solution consiste en un système de bouchon sous forme d'un couvercle solidaire du tube d'entrée du réservoir par l'intermédiaire d'un axe et d'une embase, le bouchon étant maintenu fermé par une languette ou un anneau.

L'ouverture s'effectue, dans ce cas, par appui sur la languette ou par déverrouillage de l'anneau puis par soulèvement manuel du couvercle : A l'introduction du pistolet de remplissage, il faut alors maintenir le couvercle avec une main, et introduire le pistolet dans le réservoir avec l'autre main.

L'invention a pour objet l'adaptation de ce type de bouchon à une utilisation automatisée pour la séquence d'ouverture, de remplissage, et de fermeture.

L'invention propose à cet effet un dispositif d'ouverture et de fermeture d'un réservoir, ledit dispositif comportant une embase, un couvercle, et une languette solidaire du tube d'entrée de ce réservoir, l'embase étant fixée à l'extrémité de ce tube, le couvercle et la languette étant mobiles en rotation par rapport à cette embase autour de deux axes parallèles de directions perpendiculaires à l'axe de symétrie tu tube d'entrée, entre une position fermée dans laquelle la languette bloque le couvercle qui coiffe, alors, l'extrémité du tube d'entrée et une position ouverte dans laquelle le couvercle a échappé à la languette, un ressort de rappel agissant sur la languette pour la rappeler en position fermée, caractérisé en ce que la languette a une surface d'appui suffisante pour permettre, en position fermée, à un outil exerçant une certain pression, sans précision de positionnement de celui-ci, de la faire basculer en laissant ainsi échapper le couvercle, en ce que ledit dispositif comprend un ressort, solidaire de l'embase, d'ouverture du couvercle jusqu'à amener celui-ci en contact avec une butée dont est munie l'embase, et en ce que le couvercle a sa surface supérieure qui sert de surface d'appui à l'outil pour sa fermeture.

Un tel dispositif permet d'utiliser une structure de "machine automatique" simple par réduction du nombre de degrés de liberté nécessaires, et par simplication du mouvement. De plus, il ne nécessite pas d'outil spécialisé : Le pistolet de remplissage peut par exemple être utilisé.

Avantageusement la surface supérieure du couvercle est munie d'une marque distinctive repérable par un dispositif de détection.

L'invention propose en outre un procédé automatique de remplissage d'un réservoir, muni d'un tel dispositif d'ouverture et de fermeture, qui comprend les étapes suivantes, pilotées par une machine automatique de commande de déplacement d'un outil de remplissage :

-positionnement d'un dispositif de détection de position associé audit outil, par rapport à une marque repérée par rapport au couvercle, ce qui permet de connaitre la position exacte de la languette et du couvercle ;

-appui de l'outil sur la languette pour entraîner l'ouverture du couvercle ;

-introduction de l'outil dans le tube d'entrée du réservoir ;

-remplissage de ce réservoir ;

-sortie de l'outil hors de ce tube ;

-appui de l'outil sur la surface supérieure du couvercle de manière à enclencher celui-ci sous la languette et obtenir ainsi la fermeture du dispositif.

Les caractéristiques et avantages de l'invention ressortiront d'ailleurs de la description qui va suivre, à titre d'exemple non limitatif, en référence aux figures annexées sur lesquelles :

-la figure 1 représente une vue de dessus du dispositif de l'invention ;

-la figure 2 est une vue en coupe partielle du dispositif de l'invention selon le plan II-II de la figure 1 ;

-la figure 3 illustre le procédé automatique de remplissage d'un réservoir muni d'un dispositif d'ouverture et de fermeture selon l'invention.

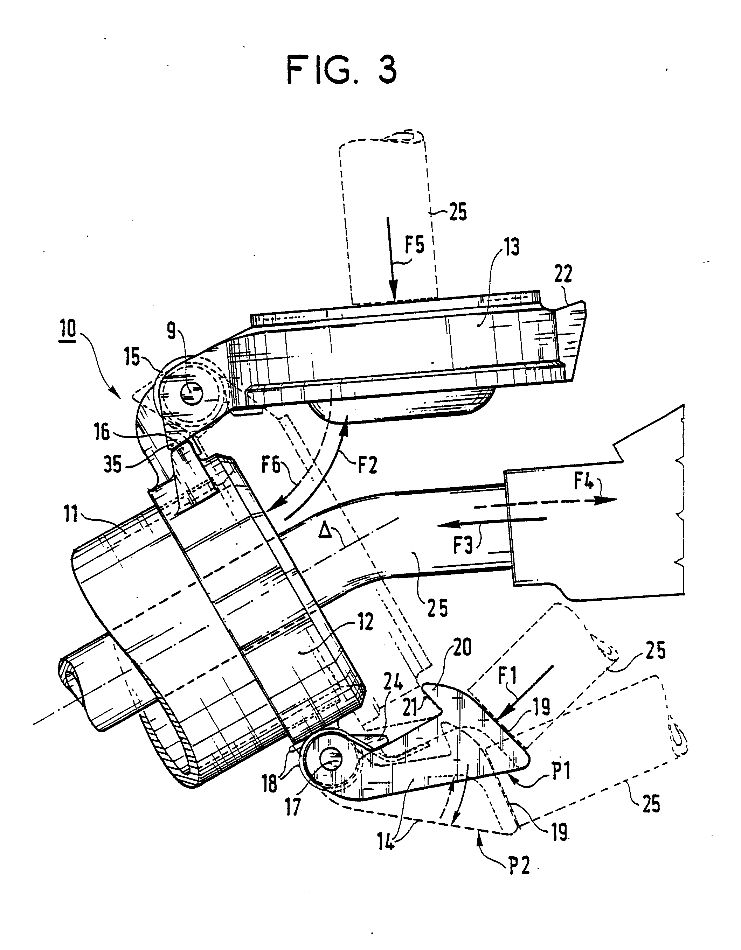

Le dispositif de l'invention 10 est fixé à l'extrémité d'un tube d'entrée 11 de réservoir, cette extrémité formant un plan perpendiculaire à l'axe Δ de symétrie de ce tube 11. La position de ce tube 11 est quelconque elle peut être, par exemple, inclinée comme représentée à la figure 3.

Le dispositif 10 comprend une embase 12, un couvercle 13 et une languette 14.

L'embase 12 est fixée par exemple par vissage sur l'extrémité du tube d'entrée 11. Le couvercle 13 est mobile par rapport à cette embase 12 autour d'un premier axe de rotation 9 de direction perpendiculaire à l'axe Δ de symétrie du tube d'entrée 11.

Un ressort d'ouverture 15, disposé autour de cet axe 9, permet jde rappeler le couvercle 13 vers une position ouverte dans laquelle une portée 35 dudit couvercle 13 est bloquée contre une butée 16 dont est munie l'embase 12.

Ce couvercle 13 est muni d'une surface supérieure d'appui 23 qui se termine par un bec d'accrochage 22 du côté opposé à l'axe de rotation 9.

Un élément creux 26, par exemple métallique, dont la partie inférieure vient s'emboîter dans l'extrémité du tube d'entrée 11 du réservoir, est solidaire du couvercle par l'intermédiaire d'un ressort 27 maintenu en position entre deux gorges cyclindriques 36 et 39 usinées respectivement dans la partie supérieure de cet élément 26 et dans la partie inférieure du couvercle 13. Son débattement est limité par un clip de blocage 28 dont est muni le couvercle 13.

Un joint élastique 29, disposé à la surface de cet élément 26 située face à l'extrémité dudit tube 11, permet d'obtenir une fermeture étanche du dispositif selon l'invention.

Cet élément 26 est muni d'un alésage 30, dans lequel est disposé un bille 37 solidaire d'un ressort 38, pour permettre l'introduction d'aire dans le réservoir au fur et à mesure que celui-ci se vide.

Pour favoriser l'automatisation de l'outil 25, la surface 23 du couvercle 13, étant dégagée, peut être utilisée pour supporter une marque distinctive repérable par un système de détection de position. Mais cette marque peut être également portée par tout élément repéré par rapport à ce couvercle.

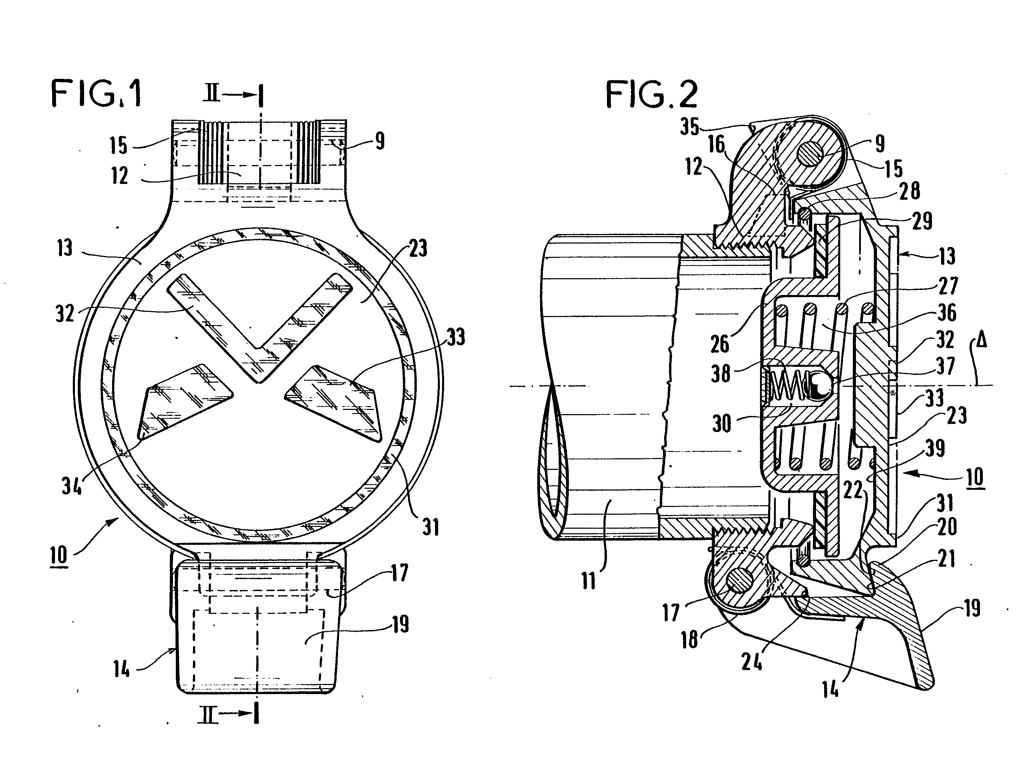

Une telle marque permet donc de connaître la position du couvercle 13. A titre d'exemple, elle peut être formée de plusiers éléments dont la couleur, par exemple blanche, se distingue de celle de la surface du bouchon, par exemple noire. Comme représenté à la figure 1, ces éléments sont au nombre de quatre : l'un 31 en forme de cercle situé à la périphérie de la surface supérieure 23 du couvercle 13, le second 32 en forme de "V" dirigé vers le centre de ce cercle, et les deux autres 33 et 34 en forme de segments inclinés, situés de part et d'autre des deux branches du "V" et dirigés vers le même centre.

La languette 14 a un profil en forme de crochet. Elle comporte une surface d'appui 19 qui se prolonge, du côté du centre du tube d'entrée 11, par un bec d'accrochage dont la partie supérieure est une portée inclinée 20, et la partie inférieure forme une portée d'accrochage 21.

Cette languette 14, mobile par rapport à l'embase 14 autour d'un deuxième axe de rotation 17 parallèle au premier axe 9, est munie d'une ressort de rappel 18 qui agit sur elle pour la rappeler contre une butée 24. En position fermée du couvercle, la portée 21 est en appui sur la portée complémentaire 22 du couvercle 13, bloquant ainsi ledit couvercle 13.

La face supérieure 23 du couvercle 13 forme elle aussi, une surface d'appui, qui sert pour la fermeture de celui-ci.

Le dispositif de l'invention peut, bien entendu, être mis en oeuvre manuellement mais le but de l'invention est de pouvoir utiliser un outil 25 d'ouverture et de fermeture du dispositif de l'invention commandé par une machine automatique ; cet outil étant non spécialisé : ce peut être l'outil servant au remplissage du réservoir, mais ce peut être, également, un autre outil.

Ainsi en fonctionnement, une fois le bouchon 13 localisé, pour ouvrir celui-ci l'outil 25 appuie sur la surface d'appui 19 de la languette 14 dans le sens de la flèche F1 pour la faire passer d'une position P1 à une position P2.

Dans cette dernière position le couvercle 13 échappe à la portée 21 de la languette 14, et poussé par le ressort 15 se soulève dans le sens de la flèche F2 et vient se positionner contre la butée 16, comme représenté à la figure 3.

Du fait de son ressort de rappel 18, la languette 14 reprend sa position P1 d'origine, dès que l'outil 25 se retire.

Le dispositif de l'invention est alors en position d'ouverture. Celle-ci est suffisante pour autoriser l'introduction de l'outil 25 dans le tube d'entrée 11 du réservoir, suivant la flèche F3, sans que la machine automatique ait à maintenir le couvercle 13 en position ouverte.

La séquence de remplissage du réservoir peut, alors, avoir lieu.

Après le retrait de l'outil 25 selon la flèche F4, la séquence de fermeture peut débuter.

Elle consiste à déplacer le couvercle 13 selon la flèche F6 par appui de l'outil 25 selon la flèche F5 sur la surface d'appui 23 du couvercle 13 jusqu'à l'enclenchement de la languette 14, qui est muni à ce effet, de la portée inclinée 20 sur laquelle glisse l'extrémité 22 du couvercle 13.

Le dispositif selon l'invention se retrouve alors, en position fermée.

Ainsi les points caractéristiques du dispositif à couvercle et languette mobiles en rotation selon l'invention sont notamment :

-une languette 14 munie d'un ressort de rappel 18, présentant une surface d'appui 19 suffisamment importante, (environ 10 cm²) permettant de réduire la précision de la machine automatique, et qui, appuyée, libère le couvercle 13 ;
-un ressort d'ouverture 15 qui lorsque la languette 19 est appuyée soulève le couvercle 13 ;
-une butée 16 qui, lorsque le ressort 15 est en action après libération de la languette 14, fixe la position d'ouverture du couvercle;
-une surface d'appui 23 du couvercle 13 utilisée pour l'appui nécessaire à la fermeture, dégagée, accessible, suffisamment important pour réduire la précision de la machine automatique, et sur laquelle peut être disposée un marque répérable.

La machine automatique de commande l'outil 25 doit, donc, permettre de positionner l'extrémité de l'outil contre les surfaces d'appui 23 et 19 du couvercle 13 ou de la languette 14.

Aussi lors de l'appui sur le couvercle par exemple, l'extrémité de l'outil 25 est amené dans un plan perpendiculaire à la surface d'appui 23 du couvercle 13 et passant par son centre selon un mouvement "X" avec une tolérance correspondant à la longueur de la languette, par exemple de l'ordre de trois centimètres.

Dans ce plan l'extrémité de l'outil effectue des mouvements combinés en "Y" et "Z".

L'introduction de l'outil 25, dans le tube d'entrée 11 du réservoir peut nécessiter un degré de liberté supplémentaire.

Un procédé automatique de remplissage d'un réservoir muni d'un dispositif comme décrit précédemment, comprend les étapes suivantes, pilotées par une machine automatique de commande de déplacement de l'outil de remplissage :
-positionnement d'un dispositif de détection de position associé audit outil 25 par rapport à la marque portée par le couvercle, ou tout autre marque repérée par rapport à ce couvercle, ce qui permet de connaître la position exacte du couvercle 13 et de la languette 14 ;
-appui de l'outil 25 sur la languette 14 pour entraîner l'ouverture du couvercle 13 :
-introduction de l'outil 25 dans le tube d'entrée 11 du réservoir ;
-remplissage de ce réservoir :
-sortie de l'outil 25 hors du tube d'entrée 11 du réservoir ;
-appui de l'outil 25 sur le couvercle 13 de manière à l'enclancher sous la languette 14 et obtenir ainsi la fermeture du dispositif.

La structure du dispositif de l'invention permet, de plus, un verrouillage en position fermée selon des techniques connues de l'homme de l'art : par blocage de languette 14, par exemple.

Il est bien entendu que le présente invention n'a été décrite et représentée qu'à titre d'exemple préférentiel et que l'on pourra remplacer ses éléments constitutifs par des éléments équivalents sans, pour autant, sortir du cadre de l'invention.

Ainsi le dispositif de l'invention peut être implanté sur tout système comportant un réservoir à remplir : ce système peut être mobile ; véhicule par exemple. Mais il peut être aussi transporté ; fût sur bande transporteuse, par exemple.

La machine automatique peut être un robot ou une mécanique spécialisée comportant plusieurs degrés de liberté obtenus grâce à des moteurs.

**Revendications**

1/ Dispositif d'ouverture et de fermeture d'un réservoir, ledit dispositif comportant une embase (12), un couvercle (13), et une languette (14) solidaires du tube d'entrée (11) de ce réservoir, l'embase (14) étant fixée à l'extrémité de ce tube (11), le couvercle (13) et la languette (14) étant mobiles en rotation par rapport à cette embase (12) autour de deux axes (9 et 17) parallèles de directions perpendiculaires à l'axe de symétrie ( Δ ) du tube d'entrée (11), entre une position fermée dans laquelle la languette (14) bloque le couvercle (13) qui coiffe, alors, l'extrémité du tube d'entrée (11) et une position ouverte dans laquelle le couvercle (13) a échappé à la languette (14), un ressort de rappel (18) agissant sur la languette pour la rappeler en position fermée ; caractérisé en ce que la languette (14) a une surface d'appui (19) suffisant pour permettre, en position fermée, à un outil (25) exerçant une certian pression, sans précision de positionnement de celui-ci, de la faire basculer en laissant ainsi échapper le couvercle (13) ; en ce que ledit dispositif comprend un ressort (15), solidaire de l'embase (12), d'ouverture du couvercle (13) jusqu'à amener celui en contact avec un butée (16) dont est munie l'embase (12) ; et en ce que le couvercle (13) a sa surface supérieure (23) qui sert de surface d'appui à l'outil (25) pour sa fermeture:

2/ Dispositif selon la revendication 1, caractérisé en ce que la languette (14) à la forme d'un crochet.

3/ Dispositif selon l'une quelconque des revendications précédentes, caractérisé en ce que le couvercle (13) est muni en son extrémité d'un bec d'accrochage (22) qui, en position fermée du couvercle (13), vient de bloquer sous la languette (14).

4/ Dispositif selon l'une quelconque des revendications précédentes, caractérisé en ce que le couvercle (13) est muni en sa partie inférieure d'un élément (26) assurant l'étanchéité du verrouillage.

5/ Dispositif selon l'une quelconque des revendications précédentes, caractérisé en ce que la surface supérieure (23) du couvercle (13) est munie d'une marque distinctive (31, 32, 33, 34) repérable par un dispositif de détection.

6/ Procédé automatique de remplissage d'un réservoir muni d'un dispositif d'ouverture et de fermeture selon l'une quelconque des revendications précédentes, caractérisé en ce qu'il comprend les étapes suivantes, pilotées par une machine automatique de commande de déplacement d'un outil de remplissage :

-positionnement d'un dispositif de détection de position associé audit outil (25) par rapport à une marque distinctive (31, 32, 33 et 34) repérée par rapport au couvercle (13), ce qui permet de connaitre la position exacte de la languette (14) et du couvercle (13) ;

-appui de l'outil sur la languette (14) pour entraîner l'ouverture du couvercle (13) ;

-introduction de l'outil (25) dans le tube (11) d'entrée du réservoir ;

-remplissage de ce réservoir ;

-sortie de l'outil (25) hors de ce tube (11) ;

-appui de l'outil (25) sur la surface supérieure (23) du couvercle (13) de manière à enclencher celui-ci sous la languette (14) et obtenir ainsi la fermeture du dispositif.

FIG.1

FIG.2

0 265 829

# FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-2 351 526 (LEBUS) <br> * Page 1, colonne de gauche, ligne 45 - page 1, colonne de droite, ligne 53; page 2, colonne de gauche, lignes 18-23; figures 3,4 * <br> --- | 1-4 | B 65 D 51/00 <br> B 67 D 5/08 <br> B 60 K 15/04 |
| Y | US-A-2 081 717 (STEELE) <br> * Page 1, colonne de droite, lignes 18-30; page 1, colonne de droite, lignes 46-53; figure 3 * <br> --- | 1-4 | |
| A | GB-A- 678 633 (CEANDESS LTD.) <br> * Figures 1,2 * <br> --- | 1,2,4 | |
| A | FR-A-2 367 174 (NEIMAN S.A.) <br> * Page 2, lignes 5-12; figure 1 * <br> --- | 1 | |
| A | AUTOMOTIVE ENGINEERING DESIGN, vol. 80, no. 12, décembre 1972, pages 34-38; I. GINSBURG et al.: "Automatic fueling system cuts vehicle fueling costs" <br> * Page 34, colonne 3, lignes 13-17 * <br> --- | 6 | |

DOMAINES TECHNIQUES RECHERCHES (Int. Cl.4)

| Catégorie | Citation | Revendication | Domaines |
|---|---|---|---|
| A | DE-A-2 929 192 (HAMBURGER HOCHBAHN AG) <br> * Page 13, ligne 5 - page 14, ligne 27; figures 1-3 * <br> ----- | 5,6 | B 65 D <br> B 60 K <br> B 60 S <br> B 67 D |

Le présent rapport a été établi pour toutes les revendications

| Lieu de la recherche | Date d'achèvement de la recherche | Examinateur |
|---|---|---|
| LA HAYE | 14-01-1988 | BERRINGTON N.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
--------------------------------------------------
& : membre de la même famille, document correspondant

EPO FORM 1503 03.82 (P0402)